Europäisches Patentamt

**European Patent Office**

**Office européen des brevets**

(11) Publication number: **0 012 785**

A1

## (12) EUROPEAN PATENT APPLICATION

(21) Application number: **78850032.0**

(22) Date of filing: **28.12.78**

(51) Int. Cl.³: **B 65 G 69/04**
B 65 G 53/56, B 65 G 65/32

(43) Date of publication of application:
**09.07.80 Bulletin 80/14**

(84) Designated Contracting States:
**BE CH DE FR GB IT NL**

(71) Applicant: **Ottosson, John Evald**
**Teatergatan 4**
**S-264 00 Klippan(SE)**

(72) Inventor: **Ottosson, John Evald**
**Teatergatan 4**
**S-264 00 Klippan(SE)**

(74) Representative: **Ström, Tore et al,**
**c/o Ström & Gulliksson AB Rundelsgatan 14**
**S-211 36 Malmö(SE)**

(54) **Arrangement in silos.**

(57) An arrangement in silos for dispersing bulk material blown into the silo (10) from a blower conduit (14). A distributor casing (15) provides an inlet passage (27) and at least three branch passages (28, 29, 30) communicating with the inlet passage (27). An intermediate branch passage (28) is provided in the extension of the blower conduit (14) and has a flow area which is reduced in relation to that of the other branch passages (29, 30) which are located on opposite sides of the intermediate branch passage (28) in acute angles thereto. The branch passages (28, 29, 30) are adapted to be connected each to one branch conduit (16, 17, 18) opening in the silo (10) from the top thereof and the inlet passage (27) is adapted to be connected to the blower conduit (14).

EP 0 012 785 A1

Croydon Printing Company Ltd.

1

This invention relates to an arrangement in silos.

More particularly, the invention relates to an arrangement in silos for dispersing bulk material when the material is being blown into the silo from a blower conduit through branch conduits connected to the blower conduit, said branch conduits opening from above into the silo and being distributed over the cross-sectional area of the silo.

The input material flow is split into partial fl. when a silo is being filled in order to fill the sil. uniformly and to avoid steep repose angles and in order that material comprising components of different weights shall not be separated during the filling whereby the material might not be of a uniform and homogeneous quality or composition when discharged from the silo.

In prior art dispersing devices such as that described in German laid-open specification No. 2,407,045, published October 10, 1974, comprising a valve housing having one or more valves, there is a risk of material being left in the dispersing device when the blowing of material is terminated. Material left in the dispersing device when the filling of the silo has been terminated can be destroyed by taking up humidity and under unfavourable conditions can form lumps and plugs in the device, which cause difficulties when the silo is to be filled next time.

The primary object of the invention is to overcome the drawbacks referred to above, and according to the invention this is achieved by an arrangement in silos of the kind initially referred to, which is characterized by a distributor casing having an inlet passage and at least three branch passages communicating with the inlet passage, an intermediate branch passage being arranged as an extension of the inlet passage adapted to be connected to the blower conduit, and having reduced flow area in relation to the other branch passages arranged at opposite sides of the intermediate branch passage at acute angles thereto, all branch passages being adapted to be connected each to one branch conduit.

The invention provides a simple arrangement for splitting the incoming material flow uniformly into three partial flows without using more or less complicated valve means such as that disclosed in the German laid-open specification referred to above. In the distributor casing arranged according to the invention there are no movable parts and the passages provided in the casing can be effectively cleaned by blowing air therethrough when the filling of the silo has been terminated, without any risk of material being left in pockets or other nooks and corners inside the distributor casing. Moreover, it is easy to incorporate the distributor casing into a supply conduit as a simple connection element without the necessity of using specific supports or other mounting means.

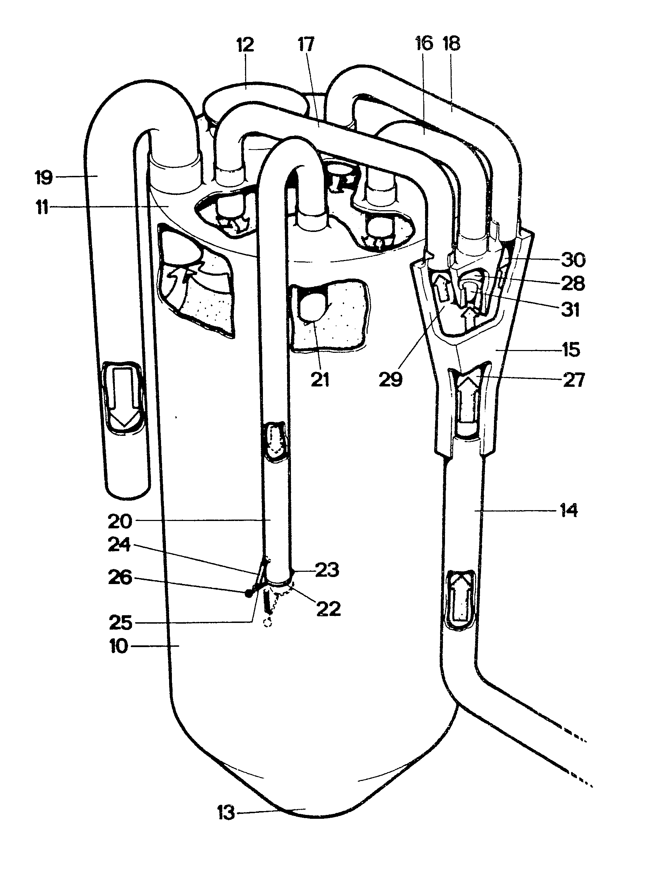

In order to illustrate the invention an embodiment thereof will be described in more detail below, reference being made to the accompanying drawing which is a perspective view of a silo, partly with portions thereof broken away, said silo being provided with a dispersing arrangement according to the invention.

In the drawing there is shown a cylindrical silo 10 which can be made e.g. of metal sheet or of glass fiber reinforced plastics material. At the top the silo has an end wall 11 with a manhole covered by a lid 12, and at the bottom the silo is provided with a conical outlet hopper 13 which can have conventional means for emptying the silo by gravity or by means of suitable conveyor means. A conduit 14 is extended to the silo for blowing bulk material into the silo by means of a flow of pressurized air and this conduit is connected to a distributor casing 15 at the top of the silo wall said casing being made e.g. of plastics material. Three branch conduits 16, 17, and 18 extend from the distributor casing 15 and open in the interior of the silo just below the wall 11. The openings thereof are distributed as uniformly as possible over the cross--sectional area of the silo and are located at the centres of the sides of an equilateral triangle inscribed into the circular cross-section of the silo.

A ventilating conduit 19 having the inlet opening thereof just below the wall 11 as have the conduits 16, 17, and 18, extends from the silo downwardly along the outside surface of the silo wall in order to communicate unobstructedly with the ambient air. The major part of the conveying air escapes through this ventilating conduit when the silo is being filled while the bulk material falls down and remains in the silo. However, a further ventilating conduit 20 is provided and this ventilating conduit which also extends from the silo through the wall 11 has the inner end 21 thereof extended downwardly in the silo below other conduits connected to the silo such that the end 21 is located at a predetermined maximum level of material in the silo.

The conduit 20 extends downwardly along the outside surface of the silo but it does not open unobstructedly in the ambient air; it has a flap 22 which is pivoted to the conduit at 23 and is held in a closed position by a helical tension spring 24 which is mounted between a bracket on the conduit 20 and an arm 25 projecting from the flap. This arm has at the outer end thereof an indicator formed as a ball 26 painted in a suitable signal colour. The conduit 20 has a smaller cross-sectional area than the conduit 19 so that a minor portion only of the escaping air passes through the conduit 20. It will be realized that the conduits 19 and 20 should have a combined cross-sectional area which is sufficiently large to enable these conduits in co-operation to receive the conveying air and to discharge such air as it is supplied from the blower conduit 14 through the branch conduits 16, 17, and 18.

In order to split the material flow supplied to the distributor casing 15 through the blower conduit 14 together with the conveying air, uniformly to the three branch conduits 16, 17, and 18 the distributor casing 15 has an inlet passage 27 which connects directly to a central branch passage 28 in the extension of the inlet passage 27 and, moreover, connects to two branch passages 29 and 30 located one on each side of the branch passage 28 and forming an acute angle thereto, said angle being e.g. about $30^\circ$. Without specific arrangements the material supplied from the blower conduit 14 through the inlet passage 27 in the distributor casing 15 would pass to a major part through the central branch passage 28 and only to a minor extent through the two outer branch passages 29 and 30 deviating laterally. In order to avoid this a bushing 31 for example of metal is inserted into the branch passage 28 to reduce the cross-sectional area thereof. Preferably, the bushing is mounted in the distributor casing so as to be exchangeable in order to provide the possibility of adjusting the dispersion of the material flow supplied. For most favourable flow conditions the bushing should be flared as a diffuser in the flow direction as shown in the drawing. The blower conduit 14 as well as the branch conduits 16, 17, and 18 are connected to the distributor casing 15 in such a way that the boundary surfaces of the passages 27, 28, 29, and 30 are substantially flush with the inside surfaces of said conduits.

Thus it will be seen that the bulk material flow supplied to the silo, by means of the distributor casing 15 will be uniformly distributed through the three branch conduits 16, 17, and 18 for dispersing the material in the silo 10 over the entire cross-sectional area thereof without valves or other moving parts being used. However, it is important that the filling of the silo is stopped before the material in the silo reaches the end wall 11 because in that case it could happen that the air supplied has no possibility to escape from the silo and that an overpressure is built up inside the silo. Then, the pressure can rapidly reach such a value that the silo cannot stand the pressure and will burst. This is prevented by the provision of the conduit 20. As long as the opening 21 of the conduit 20 inside the silo is unobstructed, part of the escaping air can pass through this conduit as mentioned above, the air pressing aside the flap 22 against the bias of the spring 24 at the prevailing overpressure in the silo so that the flap will take the position shown by dash lines in the drawing. However, when the material in the silo reaches said predetermined maximum level the opening 21 will be blocked so that no air can escape through the conduit 20. Then, the flap 22 will be returned to the closed position shown by solid lines, by means of the spring 24. Air can still escape from the silo to a sufficient extent through the conduit 19 in order to prevent a dangerous overpressure in the silo but due to the fact that the ball 26 has swung from the lower position shown by dash lines, to the upper position shown by solid lines, the attendant controlling the filling of the silo will obtain an optically readable signal indicating that it is time to

6

close the supply of further material.

The purely optical indication provided in the illustrated embodiment and obtained by means of the ball 26 can be replaced by an electrical indication, a microswitch or the like being actuated by the swinging flap 22. The microswitch provides an electrically generated acoustic or optical signal when the flap 22 is closed. By such an arrangement it is possible to directly control the apparatus used for filling the silo so that the filling is stopped automatically at the closure of the flap 22.

In the illustrative embodiment shown and described the distributor casing 15 forms three branch passages but it is possible to combine two or more distributor casings of the embodiment described to form a stack, the distributor casings of the stack thus obtained being connected to a common blower conduit 14. In this way it is possible by utilizing the invention to split the material flow supplied to six, nine, or any number of branch conduits constituting a multiple of three.

1

CLAIMS

1. An arrangement in silos for dispersing bulk material when the material is being blown into the silo from a blower conduit (14) through branch conduits (16, 17, 18) connected to the blower conduit, said branch conduits opening from above into the silo (10) and being distributed over the cross-sectional area of the silo, c h a r a c t e r i z e d by a distributor casing (15) having an inlet passage (27) and at least three branch passages (28, 29, 30) communicating with the inlet passage, an intermediate branch passage (28) being arranged as an extension of the inlet passage (27) adapted to be connected to the blower conduit (14), and having reduced flow area in relation to the other branch passages (29, 30) arranged at opposite sides of the intermediate branch passage (28) at acute angles thereto, all branch passages (28, 29, 30) being adapted to be connected each to one branch conduit.

2. An arrangement as claimed in claim 1, c h a r a c t e r i z e d in that a bushing (31) is inserted into the intermediate branch passage (28) to reduce the area thereof.

3. An arrangement as claimed in claim 2, c h a r a c t e r i z e d in that the bushing (31) is exchangeable.

4. An arrangement as claimed in claim 2 or 3, c h a r a c t e r i z e d in that the bushing (31) is flared as a diffuser in the intended direction of flow.

5. An arrangement as claimed in any of claims 1 to 4, c h a r a c t e r i z e d in that the passages (27, 28, 29, 30) of the distributor casing (15), adapted to be connected to the blower conduit (14) and the branch conduits (16, 17, 18), respectively, have the boundary surfaces thereof flush with the inside surfaces of the conduits connected thereto.

6. An arrangement as claimed in any of claims

1 to 5, c h a r a c t e r i z e d in that there is connected to the silo (10) in parallel with a ventilating conduit (19) connected to the silo at the top thereof, a further ventilating conduit (20) also connected to the top of the silo, which extends downwards into the silo to a predetermined maximum filling level therein and is provided with signal and/or contact means (22 to 26) actuated by the air flow in said further ventilating conduit.

7. An arrangement as claimed in any of claims 1 to 6, c h a r a c t e r i z e d in that the branch conduits (16, 17, 18) are connected to a cylindrical silo at places which are located at the centres of the sides of an equilateral triangle inscribed into the circular cross-section of the silo.

0012785

European Patent Office

# EUROPEAN SEARCH REPORT

0012785

Application number

EP 78 850 032.0

| | DOCUMENTS CONSIDERED TO BE RELEVANT | | | CLASSIFICATION OF THE APPLICATION (Int. Cl.²) |
|---|---|---|---|---|
| Category | Citation of document with indication, where appropriate, of relevant passages | | Relevant to claim | |
| | GB - A - 1 137 687 (CHEMISCHE WERKE HULS) <br> * page 1, lines 8 to 80; fig. * <br> -- | | 1 | B 65 G  69/04 <br> B 65 G  53/56 <br> B 65 G  65/32 |
| | DD - A - 78 520 (HOFFMANN) <br> * fig. 1 * <br> -- | | 1 | |
| D | DE - A - 2 407 045 (ALFA-LAVAL) <br> * complete document *          : <br> &  GB - A - 1 451 148 <br> -- | | 1 | **TECHNICAL FIELDS SEARCHED (Int.Cl.²)** <br><br> A 01 F  25/00 <br> B 65 G  53/00 <br> B 65 G 65/00 <br> B 65 G  69/00 |
| A | DE - A - 2 549 105 (QUICK-MIX SPEZIAL-TROCKENMÖRTEL) <br> * page 7, lines 14 to 17 * <br> -- | | | |
| A | US - A - 2 819 123 (MONTGOMERY) <br> * column 2, lines 28 to 32 * <br> ---- | | | |

| | | |
|---|---|---|
| X | The present search report has been drawn up for all claims | |
| Place of search <br> Berlin | Date of completion of the search <br> 15-08-1979 | Examiner <br> SIMON |

EPO Form 1503.1  06.78